# EUROPÄISCHE PATENTANMELDUNG

(11) **EP 0 691 292 A2**
(43) Veröffentlichungstag der Anmeldung: **10.01.1996**
(21) Anmeldenummer: 95115850.0
(22) Anmeldetag: 09.10.1995
(51) Int. Cl.: B65G 53/46

(54) **Spritzmaschine mit angetriebener Rotorstufe**

(71) Anmelder: Aliva Aktiengesellschaft, CH-8967 Widen-Mutschellen (CH)
(72) Erfinder: Egli, Ernst, CH-8951 Fahrweid (CH)
(74) Vertreter: Troesch Scheidegger Werner AG

(57) **Zusammenfassung**

An einer Spritzmaschine mit angetriebenem Rotor wird vorgeschlagen, den Rotorantrieb mittels eines hydraulischen Nabenmotors (51) vorzusehen.

## Beschreibung

Die vorliegende Erfindung betrifft eine Spritzmaschine der im Oberbegriff von Anspruch 1 angegebenen Art.

An derartigen Spritzmaschinen sind üblicherweise voluminöse Antriebsmotoren vorgesehen, welche unterhalb der Rotorstufe mit ihrem Motoren-Stator fest mit dem Maschinen-Stator verbunden sind und mit dem Motoren-Rotor antreibend auf die Rotorstufe wirken.

Es ist Aufgabe der vorliegenden Erfindung, eine Spritzmaschine der obgenannten Art zu schaffen, bei welcher der Rotorantrieb wesentlich kompakter und platzsparender aufgebaut ist.

Dies wird erreicht durch die Ausbildung der erfindungsgemässen Spritzmaschine nach dem kennzeichnenden Teil von Anspruch 1.

Dadurch, dass die Rotorstufe mittels eines hydraulischen Nabenmotors angetrieben ist, wird einerseits das für den Rotorstufenantrieb benötigte Volumen wesentlich reduziert, und zudem erlaubt der bei derartigen Motoren zentral innenliegende Stator, dass, höchst einfach, der aussenliegende Rotor mit den übrigen Teilen der Rotorstufe der Spritzmaschine verbindbar ist.

Dem Wortlaut von Anspruch 2 folgend, wird dabei vorzugsweise der Maschinen-Rotor mit den Büchsen als Modul aufgebaut und ist als solcher einfach vom hydraulischen Nabenmotor lösbar bzw. mit letzterem verbindbar.

Ein Maschinen-Rotor in Leichtbauweise wird bevorzugterweise nach dem Wortlaut von Anspruch 3 dadurch realisiert, dass er voneinander getrennte obere und untere Plattenanordnungen umfasst, welche durch mindestens eine Anzahl der Büchsen miteinander verbunden sind.

Dem Wortlaut von Anspruch 4 folgend, weisen dabei bevorzugterweise die Büchsen Aussenrohre auf sowie auswechselbare, als Verschleissteile ausgebildete Innenrohre.

Im weiteren wird bevorzugterweise an den oberen und unteren Plattenanordnungen, dem Wortlaut von Anspruch 5 folgend, je eine axial aussenliegende Verschleissplatte vorgesehen, vorzugsweise in Form eines Verschleissbleches.

Dadurch, dass in besonders bevorzugter Weise, gemäss Anspruch 6, der Antriebsmotor auf beide Plattenanordnungen des Maschinen-Rotors eingreift, wird ermöglicht, dass die Büchsen keine Drehmoment-Uebertragung übernehmen müssen, sondern im wesentlichen lediglich der Abstandshalterung der Rotorplattenanordnungen dienen bzw. dem Erhalt der modularen Einteiligkeit des Maschinen-Rotors.

Die Erfindung wird anschliessend beispielsweise anhand von Figuren erläutert.

Diese zeigen:
- Fig. 1: schematisch, den bekannten Aufbau einer Rotorspritzmaschine;
- Fig. 2: in Seitenansicht und vereinfacht, eine erfindungsgemässe Spritzmaschine;
- Fig. 3: teilweise geschnitten, eine Ansicht der Maschinen-Rotorstufe mit Antriebsmotor an einer erfindungsgemässen Maschine;
- Fig. 4: die Aufsicht auf die Rotorstufe gemäss Fig. 3;
- Fig. 5: den erfindungsgemäss modular aufgebauten Maschinen-Rotor;
- Fig. 6: einen vergrösserten Ausschnitt am Maschinen-Rotor von Fig. 5, die Verbindung einzelner Buchsen mit den Rotorabschlussplatten aufzeigend;
- Fig. 7: eine an der erfindungsgemässen Maschine bevorzugterweise eingesetzte Maschinen-Stator-seitige, obere Dichtplattenanordnung in Aufsicht;
- Fig. 8: eine teilweise Schnittdarstellung gemäss Linie B-B von Fig. 7 zur Erläuterung des erfindungsgemäss vorgesehenen federnden Abstreifers an der Dichtungsplattenanordnung;
- Fig. 9: die Aufsicht auf die untere Dichtungsplattenanordnung, statorseitig an der erfindungsgemässen Spritzmaschine;
- Fig. 10: vereinfacht und in Aufsicht, die erfindungsgemässe Spritzmaschine mit erfindungsgemäss ausklappbarer hochdruckseitiger Dichtungsplattenanordnung und diesbezüglicher Spannanordnung;
- Fig. 11a bis 11c: die erfindungsgemäss an der Maschine gemäss Fig. 10 vorgesehenen Spannkolbenanordnungen in dichtend gespannter (a), teilweise entspannter (b) und vollständig entspannter (c) Position;
- Fig. 12: schematisch und vereinfacht, das Hydraulikschema zur Betätigung der Spannkolbenanordnung gemäss Fig. 11, vorgesehen an der Maschine gemäss Fig. 10.

### Prinzip der Rotorspritzmaschine

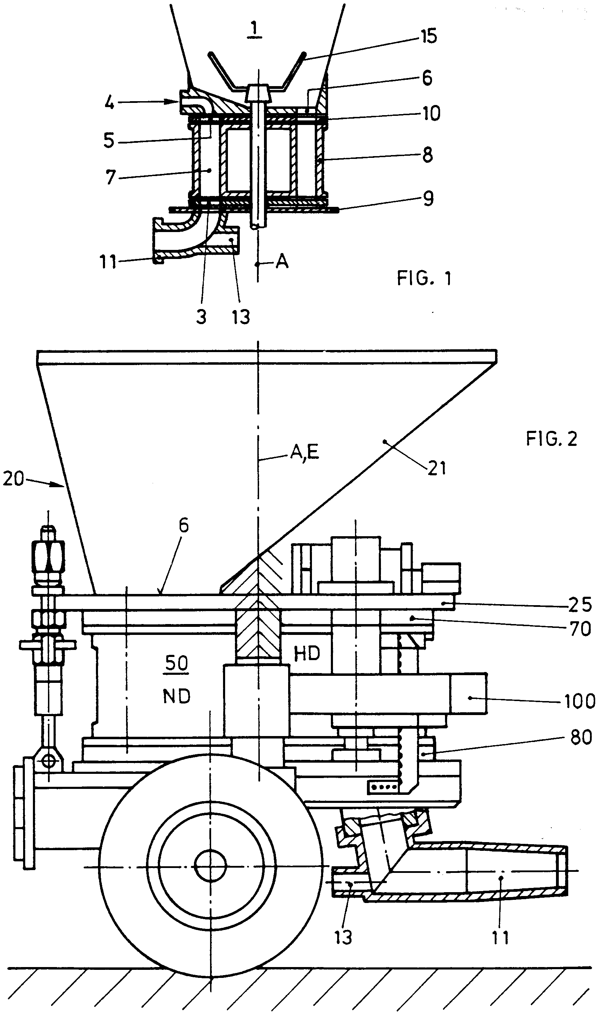

In Fig. 1 ist schematisch eine nach dem Rotorprinzip arbeitende Betonspritzmaschine dargestellt. In einen Trichter 1 wird Beton eingefüllt. Unterhalb des Trichters 1 läuft, getrieben um eine Achse A, ein Rotor 8 um, welcher, ähnlich einem Revolver, an seinem Umfang verteilt, mehrere Aufnahmebüchsen 7 für das Beton umfasst. Ortsfest am Trichter 1 ist eine Einfüllöffnung 6 so angeordnet, dass, sequentiell, die Aufnahmebüchsen 7 bei Drehen des Rotors mit der Oeffnung 6 in Ausrichtung gebracht werden.

Die jeweils mit der Einfüllöffnung 6 in Ausrichtung gebrachten Büchsen 7 am Rotor 8 sind unten durch eine stationäre Dichtplatte 9 verschlossen.

Trichterseitig ist, gerätefest, eine Druckluftleitung 4 vorgesehen, welche über eine Druckluftöffnung 5 mit jeweiligen, damit in Ausrichtung gebrachten Büchsen 7 in Wirkverbindung gebracht wird. In dieser Ausschiessposition, in Ausrichtung mit Druckluftöffnung 5, ist die jeweilige Büchse 7 ausgerichtet auf eine unten gelegene Ausschiessöffnung 3 in der Dichtplatte 9. Die Dichtplatte 9 verschliesst, einerseits, in Einfüllposition die jeweilige Büchse 7 nach unten und stellt, anderseits, für das Ausschiessen des in die jeweilige Büchse 7 eingefüllten Betons, Dichtheit an der Ausschiessöffnung 3 sicher.

Eine obere Dichtplatte 10 wirkt auf die Oberseite des Rotors 8. Die Ausschiessöffnung 3 geht über einen Krümmer 11 in die hier nicht dargestellte Förderleitung der Betonspritzmaschine über, in welchen Krümmer 11 eine Förderdruck-Luftleitung 13 einmündet.

Im Trichter 1 wirkt ein getriebenes Rührwerk 15.

Eine solche Betonspritzmaschine arbeitet nach dem sogenannten "Dünnstromprinzip", bei welchem das Spritzmedium, Beton, in der Druckluft, welche in Leitung 13 eingespiesen wird, praktisch schwimmend, durch die an den Bogen 11 angeschlossene Förderleitung gefördert wird. Entlang dieser Förderleitung werden zudem Wasser, gegebenenfalls weitere Zusatzmittel, dem Spritzmedium beidosiert.

### Erfindungsgemässe Maschine

In Fig. 2 ist, in Seitenansicht, eine erfindungsgemässe Rotor-Betonspritzmaschine dargestellt, ohne die üblicherweise auf dem gleichen Wagen montierten Steuerungen und Antriebsaggregate. Anhand dieser Figur sollen die wesentlichen Funktionsgruppen an der erfindungsgemässen Maschine vorgestellt werden, welche anschliessend detaillierter beschrieben werden sollen.

Die erfindungsgemässe Maschine umfasst, wie üblich, eine Einfüllanordnung 20, mit einem Einfülltrichter 21 mit Rührwerk (nicht dargestellt) sowie Rüttler. Wie anhand von Fig. 1 erläutert wurde, mündet der Trichter 21 schliesslich in die Einfüllöffnung 6 für die Rotorbüchsen 7 aus. Die Einfüllanordnung 20 ist an einem Geräterahmen 25 montiert.

Die erfindungsgemässe Maschine umfasst weiter eine Rotorstufe 50, eine obere stationäre Dichtungsanordnung 70 sowie eine untere stationäre Dichtungsanordnung 80. Die Rotorstufe 50 sowie die Dichtungsanordnungen 70 und 80 können, in Aufsicht, im wesentlichen durch eine diametrale Ebene E durch die Rotorachse A, senkrecht zur Ebene von Fig. 2, in eine Niederdruckseite ND und eine Hochdruckseite HD unterteilt werden. Niederdruckseitig wird, im wesentlichen unter Atmosphärendruck, Spritzmedium durch die Einfüllanordnung 20 in die Rotorstufe 50 gefüllt, während auf der Hochdruckseite, wie anhand von Fig. 1 erläutert wurde, das Spritzmedium mittels Druckluft aus Leitung 4 und Leitung 13 ausgeschossen wird. Die beiden Bereiche ND und HD sind in Fig. 2 schematisch durch die Schraffur beidseits der Ebene E durch die Rotorachse A angedeutet.

Hochdruckseitig HD ist weiter eine Spannanordnung 100 vorgesehen, mittels welcher, einerseits, die einfache Zugänglichkeit zur Rotorstufe 50 sowie den HD-seitigen Partien der Dichtungsanordnungen 70, 80 sichergestellt ist und mit welcher, anderseits, wie noch zu erläutern sein wird, die hochdruckseitigen Abdichtungen am Rotor sichergestellt werden.

Es sollen nun anschliessend die erfindungswesentlichen Baugruppen der erfindungsgemässen Maschine erläutert werden.

### Rotorstufe 50

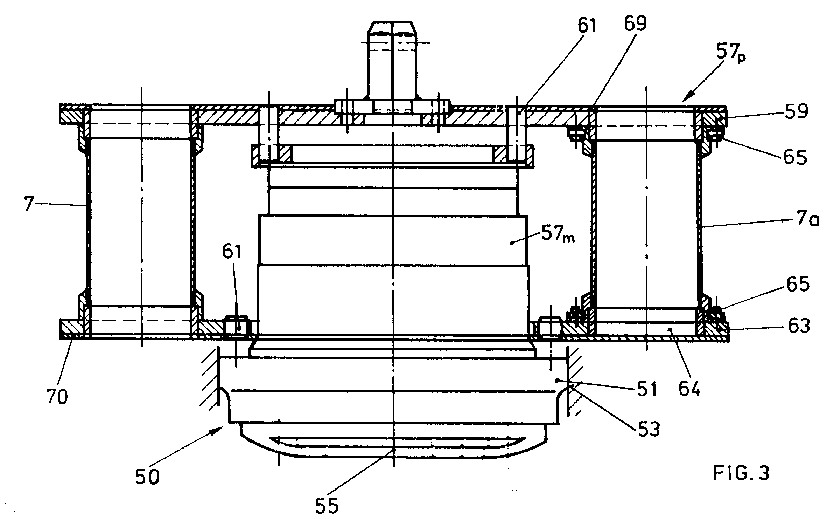

In Fig. 3 ist die an der erfindungsgemässen Maschine eingesetzte Rotorstufe 50 vereinfacht und teilweise längsgeschnitten dargestellt. Sie umfasst einen hydraulischen Nabenmotor 51, z.B. einen "Poclain"-Motor, mit einem, wie bei 53 schematisch dargestellt, starr mit dem Geräterahmen 25 (Fig. 2) verbundenen Motor-Stator 55, gebildet durch die Motorachse.

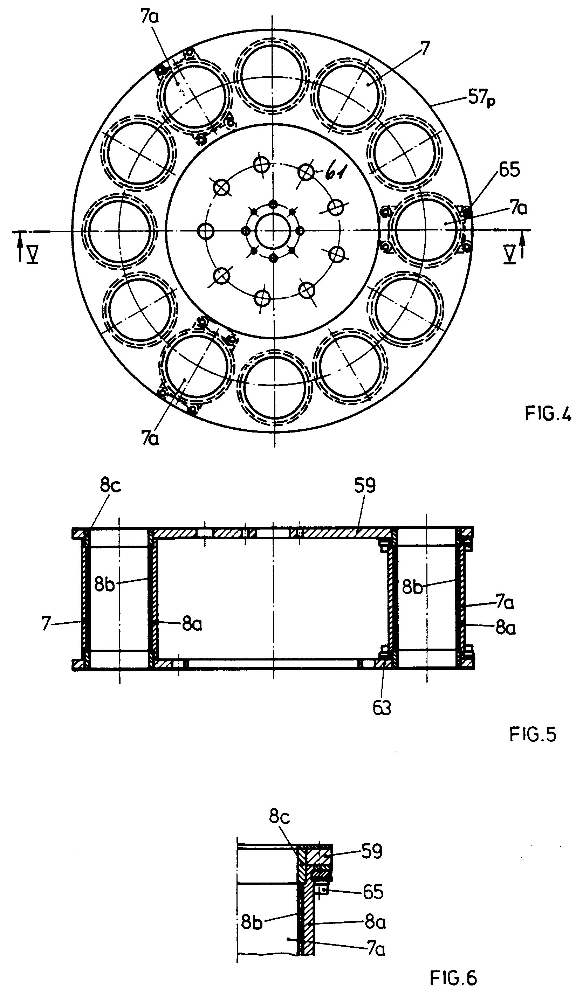

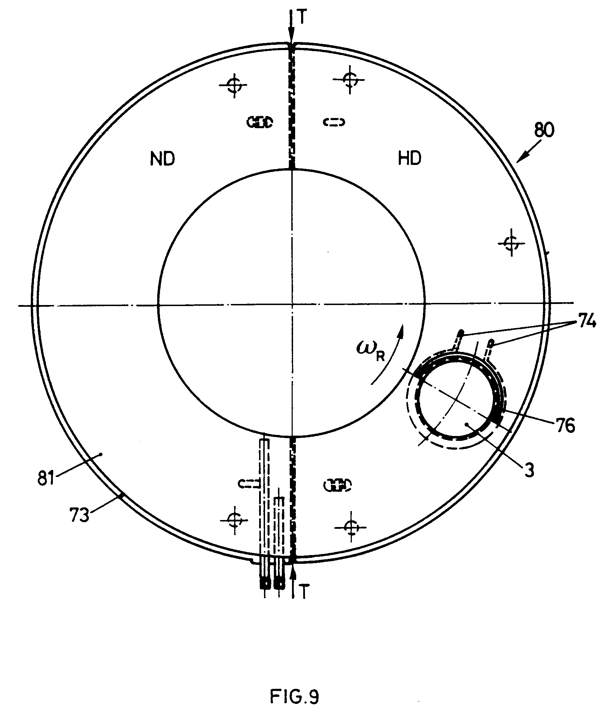

Solche Hydrauliknabenmotoren sind von anderen Anwendungen her bekannt, werden beispielsweise für den Einzel-Radantrieb von Baggern eingesetzt. Ihre Bauweise ist äusserst flach, wie sich ohne weiteres aus der Betrachtung von Fig. 3 ergibt. Der Motor-Rotor 57ₘ, um die Achse 55 drehend, trägt, entsprechend der Axialausdehnung des Maschinenrotors 57ₚ vorgebaut, den Maschinenrotor 57ₚ. Dieser ist aufgebaut aus einer oberen Rotorabschlussplatte 59, welche vom Motor-Rotor 57ₘ über obere und untere Verbindungs- und Drehmoment-Uebertragungsbolzen 61 angetrieben wird. Die Anordnung der oberen Uebertragungsbolzen 61 ist auch aus der Rotoraufsicht gemäss Fig. 4 ersichtlich.

Wie bereits erläutert wurde, sind entlang der Peripherie des Maschinenrotors 57ₚ mehrere Büchsen 7 vorgesehen, wie aus Fig. 4 ersichtlich, beispielsweise zwölf. Mindestens drei der vorgesehenen Büchsen 7, in Fig. 3 und 4 als Spannbüchsen mit 7a bezeichnet, bilden die mechanische Halteverbindung zu einer unteren Rotorabschlussplatte 63. Hierzu sind diese drei Büchsen 7a mittels Schraubbolzen 65 sowohl mit der oberen wie auch mit der unteren Rotorabschlussplatte 59 bzw. 63 verschraubt. Die übrigen Büchsen 7 sind durch Verspannen mittels der erwähnten Spannbüchsen 7a zwischen den Platten 59 und 63 fixiert.

Wie nun ohne weiteres ersichtlich, lässt sich der Maschinenrotor 57ₚ, als einheitliche Baugruppe gebildet durch die Platten 59, 63 und die Büchsen 7a und 7, durch Abheben von den Uebertragungsbolzen 61 am Nabenmotorrotor 57ₘ, modular entfernen. Der Maschinenrotor 57ₚ ist ausserordentlich leicht und umfasst im wesentlichen nur die funktionsnotwendigen Bauteile, was die Reduktion der Antriebsleistung mitermöglicht.

Der Antrieb des Maschinenrotors 57ₚ erfolgt direkt vom Rotor 57ₘ des Nabenmotors über die Bolzen 61. Die Rotorbüchsen 7, 7a übertragen kein Drehmoment, was die "Leichtbauweise" des Maschinenrotors 57ₚ mitermöglicht.

Der als einheitliches Teil entfernbare Maschinenrotor 57ₚ ist in Fig. 5 geschnitten dargestellt. Bevorzugterweise, und wie insbesondere aus Fig. 5 ersichtlich, sind die Büchsen 7 bzw. 7a, durch Aussenrohre 8a sowie, darin eingesetzt, Einsatzbüchsen 8b gebildet, damit letztere, dem Spritzmediumverschleiss ausgesetzt, einfach ausgewechselt werden können.

In Fig. 6 ist, vergrössert, die obere Abschlusspartie einer Büchse 7a dargestellt, mit Aussenrohr 8a, Einsatzbüchse 8b und einem Abschlussspannring 8c für die Einsatzbüchse 8b. Unten ist die Büchsenmontage, wie aus Fig. 3 ersichtlich, gleich und, abgesehen von den Schraubverankerungen 65, auch an den übrigen Büchsen 7.

Wie insbesondere aus Fig. 3 ersichtlich, wird vorteilhafterweise sowohl auf der oberen Rotorabschlussplatte 59 wie auch an der unteren 63 je ein Verschleissblech 69 bzw. 70 aufgelegt und je damit (nicht dargestellt) verschraubt.

Dabei ist zu betonen, dass die oberen und unteren Rotorflächen, wie dem Prinzip nach Fig. 1 ohne weiteres zu entnehmen ist, beispielsweise durch Sand und Staub, relativ hohem Verschleiss ausgesetzt sind, so dass die Verschleissbleche 69, 70 einfach einen raschen Ersatz der Rotor-Verschleissflächen ermöglichen.

### Obere Dichtungsanordnung 70

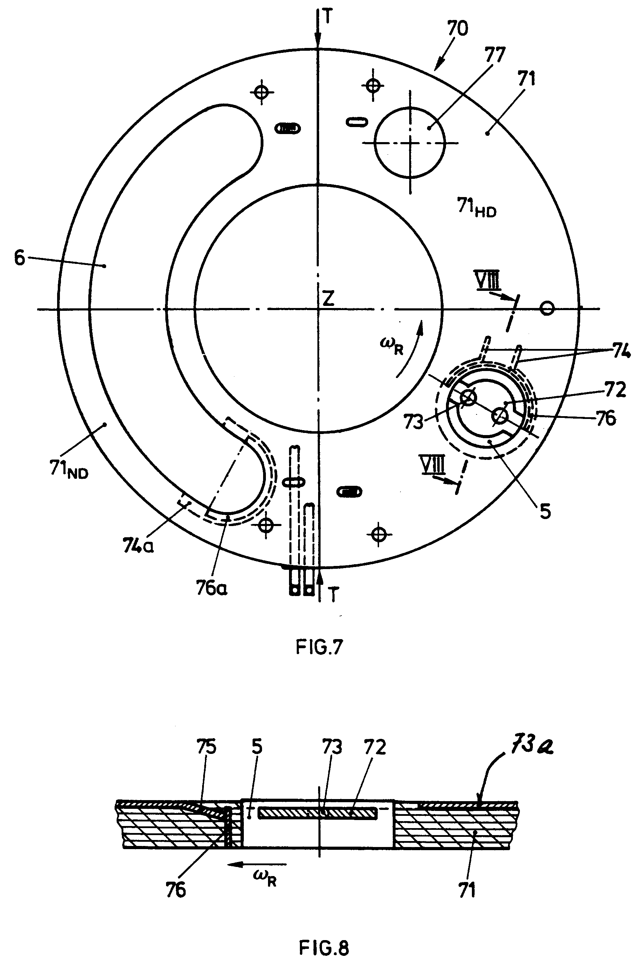

Der obere Uebergang zwischen Rotorstufe 50 und geräteseitigen Anschlüssen, nämlich der Einlassanordnung 20 und der Druckluftleitung 4 gemäss Fig. 1, erfolgt an der oberen Dichtungsanordnung 70, gemäss Fig. 7. Sie wird, geräterahmenseitig, durch eine im wesentlichen kreisringförmige, elastische Platte 71, vorzugsweise Gummiplatte, gebildet, mit einem Hochdrucksegment 71_{HD} und einem Niederdrucksegment 71_{ND}. Im Hochdrucksegment 71_{HD} ist die Druckluftöffnung 5 gemäss Fig. 1 vorgesehen.

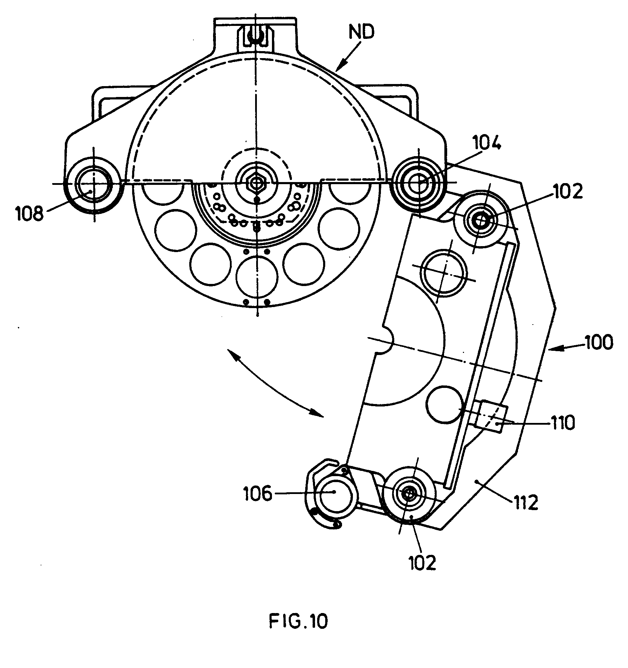

An zwei sich radial bezüglich des Kreisringzentrums Z gegenüberliegenden Halterungen ist in der Druckluftöffnung 5, wie insbesondere in Fig. 8 ersichtlich, ein im wesentlichen kreisförmiger Mittensteg 72 mit Düsenöffnungen 73 aufgehängt. Damit wird ein düsenartiger Uebergang geschaffen. Die Platte 71, aus hartem, vulkanisiertem Gummi gefertigt, weist an ihrer Oberseite eine Metalldeckplatte 73 auf, an der der Steg 72 angeformt ist.

Mit ω_{R} ist in Fig. 7 und in Fig. 8 die Rotorbewegung bezüglich der feststehenden Platte 71 eingetragen. Die Deckplatte 73 ist im Bereich der Druckluftöffnung 5, wie bei 74 dargestellt, eingeschnitten und bildet den insbesondere in Fig. 8 ersichtlichen, sich in die Platte hinein erstreckenden Federsteg 75. An diesem ist, endständig, ein halbkreissegmentförmig gebogenes Abstreifelement 76 angeschweisst. Das Abstreifelement 76 ist an der Unterseite der Platte 71, d.h. mit der mit der oberen Rotorfläche in Reibeingriff befindlichen Plattenfläche, bündig freiliegend und, mit dem Material der Platte 71 und dem Federsteg 75, federnd gelagert. Damit ist ein enges, selbstnachstellendes Anlegen des Abstreifelementes 76 an der oberen Rotorabschlussfläche sichergestellt.

Durch die Druckluftöffnung 5 wird, wie in Fig. 1 schematisch dargestellt, über Druckluftleitung 4 jeweils der Füllinhalt einer der Rotorbüchsen 7, 7a ausgeschossen. Aufgrund des unter hohem Ueberdruck erfolgenden Ausschiessens bleibt, bei Weiterdrehen der Rotorstufe 50 in Richtung ω_{R}, die eben geleerte Rotorbüchse 7, 7a auf Ueberdruck. Aus diesem Grund folgt der Druckluftöffnung 5 in der Platte 71 eine Druckentlastungsöffnung 77, welche mit der Maschinenumgebung kommuniziert und durch welche Druckausgleich erfolgt, bevor die betrachtete Rotorbüchse das Niederdrucksegment 71_{ND} der Platte 71 erreicht.

Im Niederdrucksegment 71_{ND} der Platte 71 ist, kreissegmentförmig, die Einfüllöffnung 6 gemäss Fig. 1 vorgesehen. An der Einfüllöffnung 6 werden mehrere, im spezifischen Beispiel ca. viereinhalb Büchsen 7, 7a der Rotorstufe 50 gleichzeitig gefüllt. In Rotordrehrichtung ω_{R} ist am Ende der Oeffnung 6 wiederum ein Abstreifelement 76a vorgesehen, angebracht und in die Platte 71 eingelassen über nach unten gebogene Stege 74a an der Deckplatte 73 gemäss Fig. 8, in Analogie zum Element 76 an der Druckluftöffnung 5.

Insbesondere wesentliche Aspekte an der oberen, mit dem Rotor in Reibeingriff stehenden Platte 71 sind einerseits die im Gummiplattenmaterial federnden Abstreifer 76 und 76a, anderseits das Vorsehen der Druckentlastungsöffnung 77.

### Untere Dichtungsanordnung 80

Gemäss Fig. 9 ist unterhalb der Rotorstufe 50 eine untere, kreisringförmige Dichtplatte 81, wiederum aus elastischem Material, vorzugsweise aus Gummi, vorgesehen, wobei auch die untere Dichtplatte 81 in ein Hochdrucksegment 81_{HD} und ein Niederdrucksegment 81_{ND} unterteilbar ist. Hochdruckseitig ist die Ausschiessöffnung 3 gemäss Fig. 1 vorgesehen, ausgerichtet auf die Druckluftöffnung 5 gemäss Fig. 7. An der Ausschiessöffnung 3 ist ein Abstreifelement 76 vorgesehen, angeordnet und aufgebaut wie das Abstreifelement 76 an der Druckluftöffnung 5.

Während Fig. 7 eine Aufsicht auf die obere Dichtplatte 71 darstellt, zeigt Fig. 9 die Aufsicht auf die untere und zeigt damit das Abstreifelement 76 an der Oeffnung 3 freiliegend. Der Plattenaufbau der Platte 81 mit einer Deckplatte 73 darunter, analog zu derjenigen gemäss Fig. 8, ist gleich wie der Aufbau der oberen Platte 71, abgesehen davon, dass an der unteren Platte 81 weder eine Entlastungsöffnung 77 noch, wie sich ohne weiteres aus Fig. 1 ergibt, eine Einfüllöffnung 6 vorgesehen ist.

Wie im weiteren ersichtlich, aus Quervergleich der Fig. 1, 7 und 9, bestehen auf der Hochdruckseite HD wesentlich höhere Dichtungsanforderungen zwischen den beiden Platten 71, 81 und der Rotorstufe 50. Es ist mithin möglich, mittels Dimensionierung der Dicke der jeweiligen Dichtplatten 71 und 81 an den Niederdrucksegmenten 71_{ND}, 81_{ND} etwas geringer als an den Hochdrucksegmenten 71_{HD}, 81_{HD}, das auf den Rotorantrieb rückwirkende Reibmoment wesentlich zu reduzieren. Dies erlaubt wiederum, die notwendige Antriebsleistung des vorgesehenen Nabenmotors 55, 57 (Fig. 3) zu reduzieren.

### Spannanordnung 100

In Fig. 10 ist eine Aufsicht auf eine erfindungsgemässe Maschine dargestellt, wobei, aus Uebersichtsgründen, alle obengelegenen Aggregate entfernt sind. Aus Fig. 10 ist ein ganz wesentliches Merkmal der erfindungsgemässen Maschine erkenntlich:
Die obere und die untere Dichtungsplatte 71 bzw. 81 sind, wie mit T in den Fig. 7 und 9 dargestellt, in je die beiden Segmente 71_{HD}, 71_{ND}; 81_{HD}, 81_{ND} getrennt. Wie noch zu beschreiben sein wird, sind die beiden Hochdrucksegmente 71_{HD} und 81_{HD} mit noch zu beschreibenden Spannkolben 102 um ein in der Trennebene entsprechend T vorgesehenes vertikales Schwenklager 104 ausschwenkbar; dem Schwenklager 104 gegenüberliegend ist eine Verschlusspartie 106 vorgesehen, mit welcher die Spannvorrichtung 100, in eingeklappter Position, durch Eingriff auf eine niederdruckseitige Verschlussanordnung 108 verriegelt werden kann.

Die Spannkolbenanordnungen 102 mit weiteren mit der Spannanordnung 100 ausschwenkbaren Organen, wie Filterstufe für die Druckausgleichsöffnung 77, Anschluss 110 für die Druckluft an Leitung 4 von Fig. 1 etc., sind an einem Trägerrahmen 112 montiert.

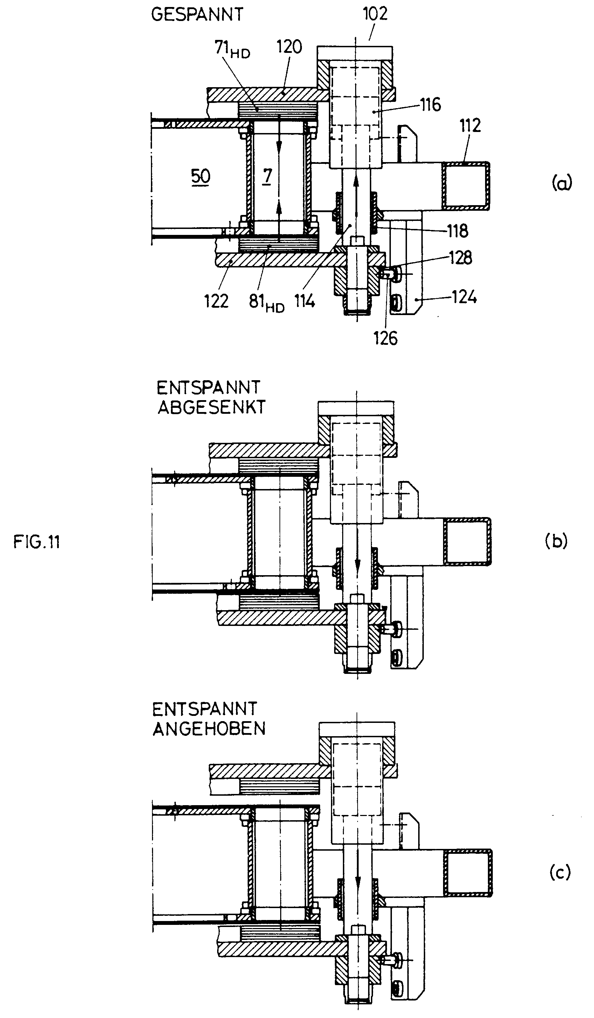

In Fig. 11(a) bis 11(c) ist eine der beiden gleich ausgebildeten Spannkolbenanordnungen 102 in gespannter Position (a), in entspannter und nach unten abgesenkter Position (b) und in entspannter, nach oben und unten abgehobener Position (c) dargestellt. Die Bedeutung dieser Positionen wird erläutert werden.

Gemäss Fig. 11(a), welche im Detail erläutert werden soll, um dann anhand der Fig. 11(b) und (c) die Kinetik der beiden Spannkolbenanordnungen 102 gemäss Fig. 10 zu erläutern, ist die Kolbenstange 114 einer Zylinder/Kolbenanordnung 116 in einer Gleitbüchse 118 axial frei beweglich gelagert. Der Zylinder der Kolben/Zylinderanordnung 116 trägt, über eine Montageplatte 120, welche gemäss Fig. 10 beide Spannkolbenanordnungen 102 trägt, das hochdruckseitige Segment 71_{HD} der Platte 71.

Die Kolbenstange 114 ihrerseits trägt, wiederum über eine Trägerplatte 122, welche gemeinsam für beide Spannkolbenanordnungen 102 vorgesehen ist, das Hochdrucksegment 81_{HD} der unteren Platte 81.

Durch Zusammenzug der hydraulischen Kolben/Zylinderanordnung 116 werden symmetrisch die beiden Hochdrucksegmente 71_{HD} und 81_{HD}, je an zwei Bereichen, gemäss Fig. 10 durch die beiden Spannkolbenanordnungen 102 gleichermassen an die Rotorstufe 50 bzw. deren Büchsen 7 gepresst.

Mittels eines Stellschiebers 124 ist bezüglich des Rahmens 112 ein unterer Anschlagnocken 126 für die Kolbenstange 114 der Kolben/Zylinderanordnung 116 positionierbar und liegt in gespannter Position der Spannkolbenanordnung 102 gemäss Fig. 11(a), in axialer Richtung betrachtet, beabstandet und unterhalb einer Anschlagfläche 128 an der Kolbenstange 114.

Wird nun die Kolben/Zylinderanordnung 116 entspannt, so wird, gemäss Fig. 11(b), vorerst die Kolbenstange 114 auf den Anschlagnocken 126 bewegt; Zylinder mit den Platten 120 und 71_{HD} bleiben, Schwerkraft-nach-unten-getrieben, stationär. Dadurch wird das untere Dichtplattensegment 81_{HD}, wie in Fig. 11(b) dargestellt, nach unten abgesenkt.

Durch Weiterausfahren der Kolben/Zylinderanordnung 116 wird nun, bei auf Anschlag gefahrener Kolbenstange 114, der Zylinder hochgehoben, gemäss Fig. 11(c), wodurch die Montageplatte 120 gemeinsam mit dem Hochdrucksegment 71_{HD} der oberen Druckplatte 71 angehoben wird.

Wie anhand des noch zu erläuternden Hydraulikschemas gezeigt werden wird, werden die beiden Spannkolbenanordnungen 102 je mit ihren Kolben/Zylinderanordnungen 116 synchron bewegt, so dass auf einfache Art und Weise einerseits die erforderliche Dichtungsspannung gemäss Fig. 11(a) an die Rotorstufe 50 erreicht wird, anderseits voll entspannte Position gemäss Fig. 11(c), in welcher, gemäss Fig. 10, die ganze geräteseitige Hochdruckpartie der Spannvorrichtung 100 ausgeklappt werden kann.

Durch Vorgabe des Druckes auf die Spannkolbenanordnungen 102 gemäss Fig. 11(a) kann der notwendige Dichtungsdruck, unabhängig von den Dichtungsverhältnissen an der niederdruckseitigen Partie ND gemäss Fig. 10, optimiert werden, derart, dass nur an den HD-Segmenten hohe Flächenpressungen realisiert werden, wo sie, eben hochdruckseitig, auch notwendig sind. Niederdruckseitig bleiben die Dichtungsverhältnisse davon unbeeinflusst, entsprechend einer wesentlich geringeren notwendigen Flächenpressung. Dies erlaubt, die Leistung des Rotorantriebsmotors, im speziellen des vorgestellten Nabenmotors, um mehr als die Hälfte zu reduzieren. Wird beispielsweise eine hochdruck- wie auch niederdruckseitig gleiche dichtende Flächenpressung zwischen den Platten 81, 71 und Rotorstufe 50 realisiert und ergibt sich, im wesentlichen dadurch, eine notwendige Antriebsleistung von 41kW, so kann durch erfindungsgemässe Zweiteilung in Niederdruckseite und Hochdruckseite an der erfindungsgemässen Maschine die notwendige Motorenleistung auf ca. 19kW reduziert werden.

### Hydraulikschema für die Spannkolbenanordnungen 102

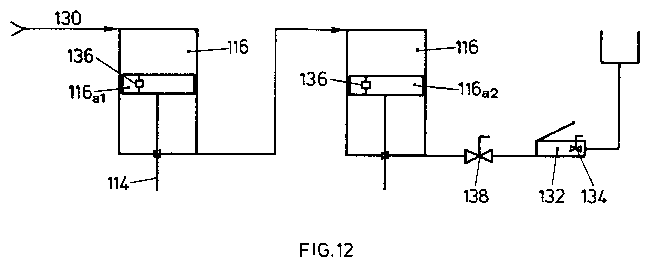

In Fig. 12 ist schematisch das Hydraulikschema für die Zylinder/Kolbenanordnungen 116 der Spannkolbenanordnungen 102 gemäss Fig. 11 dargestellt. Die beiden Zylinder der Anordnungen 116 sind seriegeschaltet, wobei das Volumen unterhalb des Kolbens 116ₐ₁, unter Mitberücksichtigung des durch die Kolbenstange 114 aufgespannten Volumens, gleich gross ist wie das Volumen oberhalb des Kolbens 116ₐ₂. Ueber Leitung 130 wird Anlagedruck, beispielsweise 18bar, angelegt. Zum Spannen der Spannkolbenanordnungen wird mittels einer Handpumpe 132 ein hoher Druck aufgebaut, womit beide Kolben 116ₐ in den Zylindern spannend (Fig. 1) hochgetrieben werden. Die erwähnten gleichen Volumina sichern dabei, dass beide Kolben 116ₐ den gleichen Spannhub zurücklegen.

Zum Entspannen der Spannkolbenanordnungen 102 wird der durch die Handpumpe 132 aufgebaute hohe Druck, beispielsweise mittels eines manuell betätigbaren Ventils 134, entspannt, so dass die beiden Kolben 116ₐ aufgrund des Anlagedruckes in Leitung 130 nach unten laufen und, gemäss Fig. 11, die Rotorstufe freigeben.

In den Kolben 116ₐ sind je mechanisch betätigte Rückschlagventile 136 bekannter Art eingebaut. Erreicht beispielsweise Kolben 116ₐ₁ aufgrund beispielsweise von Leckverlusten die untere Fläche seines zugeordneten Zylinders, bevor Kolben 116ₐ₂ die entsprechende erreicht, so wird, mechanisch, das Ventil 136 am Kolben 116ₐ₁ geöffnet, so dass, durch den Anlagedruck betrieben, Kolben 116ₐ₂ ebenfalls in die Anschlagposition getrieben wird. Damit wird Bewegungsgleichlauf der Kolben 116ₐ nötigenfalls immer wieder erstellt.

Zwischen Handpumpe 132 und dem diesbezüglichen Anschluss an die eine der Kolben/Zylinderanordnungen 116 ist vorzugsweise ein manuell betätigbares Kugelventil 138 vorgesehen.

## Patentansprüche

1. Spritzmaschine mit einer angetriebenen Rotorstufe (50), an deren Peripherie, mit mindestens einer axialen Ausrichtungskomponente, beidseits offene Büchsen (7, 7a) angeordnet sind, sowie mit einem Maschinen-Stator mit einer Einfüllöffnung (6) von einer Füllanordnung (20) für Spritzmedium, einer Druckluft-Anschlussöffnung (5), einer in Büchsenrichtung der Druckluft-Anschlussöffnung (5) gegenüberliegende Ausspritzöffnung (3), wobei alle genannten Oeffnungen (6, 5, 3) am Maschinen-Stator so angeordnet sind, dass bei Drehen der Rotorstufe (50) die Oeffnungen der Büchsen (7, 7a) über die genannten Oeffnungen (6, 5, 3) streichen, dadurch gekennzeichnet, dass die Rotorstufe (50) mittels eines hydraulischen Nabenmotors (51) angetrieben ist.

2. Spritzmaschine nach Anspruch 1, dadurch gekennzeichnet, dass die Rotorstufe (50) einen Maschinenrotor (57ₚ) mit den Büchsen (7, 7a) umfasst, der als Modul vom Motor (51) lösbar ist.

3. Spritzmaschine nach Anspruch 2, dadurch gekennzeichnet, dass der Maschinenrotor (57ₚ) in Axialrichtung voneinander getrennte Plattenanordnungen (59, 63) umfasst, welche durch mindestens eine Anzahl der Büchsen (7, 7a) verbunden sind.

4. Spritzmaschine nach einem der Ansprüche 1 bis 3, dadurch gekennzeichnet, dass die Büchsen durch ein Aussenrohr (8a) sowie ein auswechselbares Innenrohr (8b) gebildet sind.

5. Spritzmaschine nach einem der Ansprüche 1 bis 4, dadurch gekennzeichnet, dass die Rotorstufe (50) zwei axial beabstandete Plattenanordnungen (59, 63) umfasst, woran, je axial aussenliegend, eine Verschleissplatte (69, 70), vorzugsweise ein Verschleissblech, angeordnet ist.

6. Spritzmaschine nach Anspruch 3, dadurch gekennzeichnet, dass der Motor (51) auf beide Plattenanordnungen (59, 63) eingreift, derart, dass die Büchsen (7, 7a) von einer Drehmomentübertragung entlastet sind.
